Europäisches Patentamt

(19) European Patent Office

Office européen des brevets

(11) Veröffentlichungsnummer: **0 340 431**
B1

(12) **EUROPÄISCHE PATENTSCHRIFT**

(45) Veröffentlichungstag der Patentschrift:
12.12.90

(51) Int. Cl.⁵: **B60K 17/22**

(21) Anmeldenummer: **89104659.1**

(22) Anmeldetag: **16.03.89**

(54) Antriebsverbindung zwischen dem Getriebe und der Hinterachse.

(30) Priorität: **30.04.88 DE 3814709**

(43) Veröffentlichungstag der Anmeldung:
**08.11.89 Patentblatt 89/45**

(45) Bekanntmachung des Hinweises auf die Patenterteilung:
**12.12.90 Patentblatt 90/50**

(84) Benannte Vertragsstaaten:
**AT CH DE GB IT LI SE**

(56) Entgegenhaltungen:
**FR-A- 2 441 506**
**GB-A- 1 159 277**
**US-A- 3 123 171**

(73) Patentinhaber: **MAN Nutzfahrzeuge Aktiengesellschaft,
Dachauer Strasse 667 Postfach 50 06 20,
D-8000 München 50(DE)**

(72) Erfinder: **Rühmann, Gerd, Dipl.-Ing. (FH), Am
Steinberg 1, D-8031 Gilching(DE)**

ACTORUM AG

EP 0 340 431 B1

**Beschreibung**

Die Erfindung bezieht sich auf eine Antriebsverbindung zwischen dem Getriebe und der angetriebenen Hinterachse eines Nutzfahrzeuges, insbesondere eines Sattelschleppers mit Unterflurbauweise der Motor-Getriebe-Einheit, wobei die Getriebeausgangswelle mit der Hinterachseingangswelle über eine gegen äußere Einflüsse abgeschirmte, homokinetische Gelenkwelle verbunden ist.

Antriebsverbindungen dieser Art sind bekannt, wobei der in der Getriebe und Hinterachse verbindenden Gelenkwelle infolge Ein- oder Ausfederung der Hinterachse erforderliche Längenausgleich in der die beiden homokinetischen Gelenke der Gelenkwelle verbindenden Keilverzahnung stattfindet. Dies bedeutet einerseits eine verhältnismäßig große Länge der Gelenkwelle, was bei kurz bauenden Motor-Getriebe-Einheiten und kurzem Radstand unerwünscht ist, andererseits einen erheblichen Verschleißfaktor in der Keilverzahnung. Weiterhin bedarf die rotationsfreie, mittenzentrierte Anordnung des die Gelenkwelle gegen äußere Einflüsse abschirmenden Faltenbalges eines nicht unbeträchtlichen Aufwandes an zusätzlichen Bauelementen.

Der Erfindung liegt die Aufgabe zugrunde, Getriebe und Hinterachse eines Nutzfahrzeuges derart anzuordnen und mittels einer gegen Umwelteinflüsse geschützten homokinetischen Gelenkwelle zu verbinden, daß ein minimierter Abstand zwischen Getriebe und Hinterachse erzielt wird.

Dies wird dadurch erreicht, daß die über einen Haltebock am Fahrzeuglängsrahmen befestigte Achsschwinge, die Hinterachse tragend und mittels einer Feder gegenüber dem Fahrzeuglängsrahmen abgestützt, in einem auf oder einem nahe der Antriebsmittelachse ED (von Getriebeausgangswelle und Hinterachswelle) liegenden Punkt (A) angelenkt ist und als Verbindungselement zwischen der Getriebeausgangswelle und der Hinterachseingangswelle eine Gelenkwelle mit einem an sich bekannten homokinetischen Festlager und einem an sich bekannten homokinetischen Loslager derart angeordnet ist, daß das Festlager, schwenkbar in (B) gelagert, an der Getriebeausgangswelle und das axial verschiebbare Loslager, schwenkbar in (C) gelagert, an der Hinterachseingangswelle angeordnet ist, wobei der sich ergebende Beugungswinkel (α) des getriebeseitigen Festlagers größer ist als der sich ergebende Beugungswinkel (β) des hinterachsseitigen Loslagers. Homokinetische Gelenklager erlauben in der Regel große Beugungswinkel, wie sie bei durch Ein- und Ausfedern der Hinterachse erforderlichen Höhenversatz derselben gegenüber dem Getriebe erforderlich sind. Diese Beugungswinkel werden mit konventionellen homokinetischen Gelenkwellen mühelos realisiert, allerdings muß der Längenausgleich über eine die beiden homokinetischen Gelenke verbindenden Wellen-Hülsenverbindung mit Keilwellenverzahnung erfolgen, was eine verhältnismäßig lange Gelenkwelle bedingt, wie auch ein erheblicher Verschleiß in der Keilwellenverzahnung in Kauf genommen werden muß.

Die erfindungsgemäße Einrichtung baut unter Verzicht eines derartigen Längenausgleichs optimiert kurz. Dies wird möglich durch eine bestimmte geometrische Zuordnung von Getriebe, Achsschwinge und Hinterachse, die die Verwendung eines an sich bekannten homokinetischen Festlagers mit großem Beugungswinkel auf der Getriebeseite und eines an sich bekannten homokinetischen Loslagers mit geringerem Beugungswinkel, aber auch zusätzlich geringem Längenausgleich an der Hinterachsseite gestatten, wobei Festlager und Loslager derart nah verbunden werden können, daß sie sich in maximaler Beugung fast berühren. Wesentlich dabei ist eine mit dem Antriebsstrang "ED" fluchtende Schwingenanlenkung "A". Je näher der Gelenkmittelpunkt "B" an den Schwingenanlenkpunkt "A" herangelegt wird, umso kleiner werden die Beugungswinkel α und β sowie der Schiebeweg "S". Wenn die Punkte "A" und "B" zusammenfallen, wird der Beugewinkel β = 0 und der Schiebeweg "S" = 0. Der Winkel α entspricht dann dem Achsschwingenwinkel. In dieser Situation ist das Gelenkloslager überflüssig. Gelenkpunkt "C" ist konstruktiv durch den erforderlichen Abstand zum Getriebe bestimmt. Anlenkpunkt "A" ergibt sich konstruktiv durch die Erfordernisse der Kinematik von Achseinfederung und dem Federweg der Luftfeder sowie durch Beanspruchung und Platzverhältnisse. Die Einfederkinematik der Achsanlenkung und die Lage des Antriebsstranges bewirken, daß die Beugungswinkel "β1" und "β2" am Loslager stets kleiner sind als die Beugungswinkel "α1" und "α2" am Festlager. Solcherart wird am Gelenkmittelpunkt "C" das Loslager mit Schiebeweg "s" und geringerem Beugewinkel "β" angeordnet. Die zulässigen Beugungswinkel "β1" und "β2" bestimmen die Abstände BC1 bzw. BC2 der beiden Gelenklager.. Daraus ergeben sich auch die Beugungswinkel "α1" bzw. "α" des Festgelenkes am Gelenkmittelpunkt "B". Die Schiebewege s1 bzw. S2 resultieren wiederum aus der Krümmungsdifferenz der Kreisbögen AC - BC.

Nach einem weiteren Merkmal der Erfindung ist der Anlenkpunkt "A" der Achsschwinge gegenüber der Antriebsmittelachse "ED" derart verschoben, daß die sich bei Auslenkung der Achsschwinge ergebenden Beugungswinkel "β1" und "β2" gleich sind. Solcherart wird der zulässige Beugungswinkel "β" optimal ausgewertet, und es ergibt sich weiterhin ein gleichmäßiger Verschleiß der Gelenke.

Nach einem besonders wichtigen, den Erfindungsgedanken wesentlich stützenden Merkmal besteht das homokinetische Festlager aus einem auf der Getriebeausgangswelle befestigten Außenteil und einem Innenteil, das über eine Welle unter Zwischenschaltung einer Distanzbuchse mit dem Innenteil des homokinetischen Loslagers verbunden ist, dessen Außenteil fest über einen Flansch mit der Hinterachseingangswelle verbunden ist. Auf diese Weise wird der Einbauraum zwischen Getriebe und Hinterachse klein gehalten, so daß optimale Verhältnisse für den Einbau einer Motor-Getriebe-Einheit in Unterflurbauweise bei Fahrzeugen mit kurzem Radstand geschaffen sind. Auch die Montageverhältnisse für die unabhängig voneinander einbaubaren Außen- und Innenteile der Gelenke, die dann durch eine separate Verbindungswelle miteinander verbunden werden, sind besonders günstig.

Nach einer weiteren, besonders vorteilhaften Ausgestaltung der Erfindung sind am Getriebegehäuse und Hinterachsgehäuse Abdeckrohre befestigt, und ist zusätzlich ein Abdeckrohr von einer geteilten Abdeckkappe übergriffen, wobei das eine Abdeckrohr und die Abdeckkappe mittels eines Faltenbalges verbunden sind. Aufgrund der geringen Beugungswinkel der homokinetischen Lager gegenüber bekannten Ausführungen muß sich hier der Faltenbalg nicht so weit ausfalten. Er kann daher einfacher, d.h. mit weniger Falten ausgebildet sein. Auch unterliegt er nicht einem so hohen Walkverschleiß. Weiterhin ist durch die teilbare Abdeckkappe bei Bedarf ein problemloser, schneller Zugang zu den homokinetischen Gelenken gesichert.

Weitere Vorteile und Merkmale der Erfindung sind den Ansprüchen, der speziellen Figurenbeschreibung und den Zeichnungen zu entnehmen.

Die Erfindung ist in einem Ausführungsbeispiel dargestellt und beschrieben.

Es zeigen:

Fig. 1 das schematische Prinzip der erfindungsgemäßen Antriebsverbindung,

Fig. 2 die homokinetische Gelenkwelle und ihre Anordnung zwischen Getriebe und Hinterachse im Ruhezustand,

Fig. 3 die homokinetische Gelenkwelle und ihre Anordnung zwischen Getriebe und Hinterachse im aus- oder eingefederten Zustand.

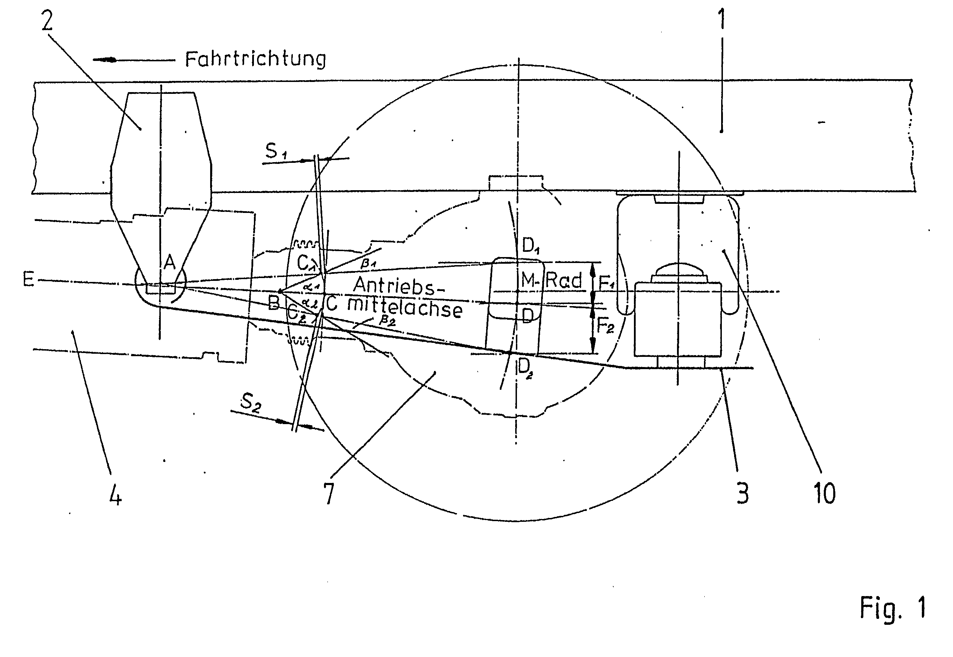

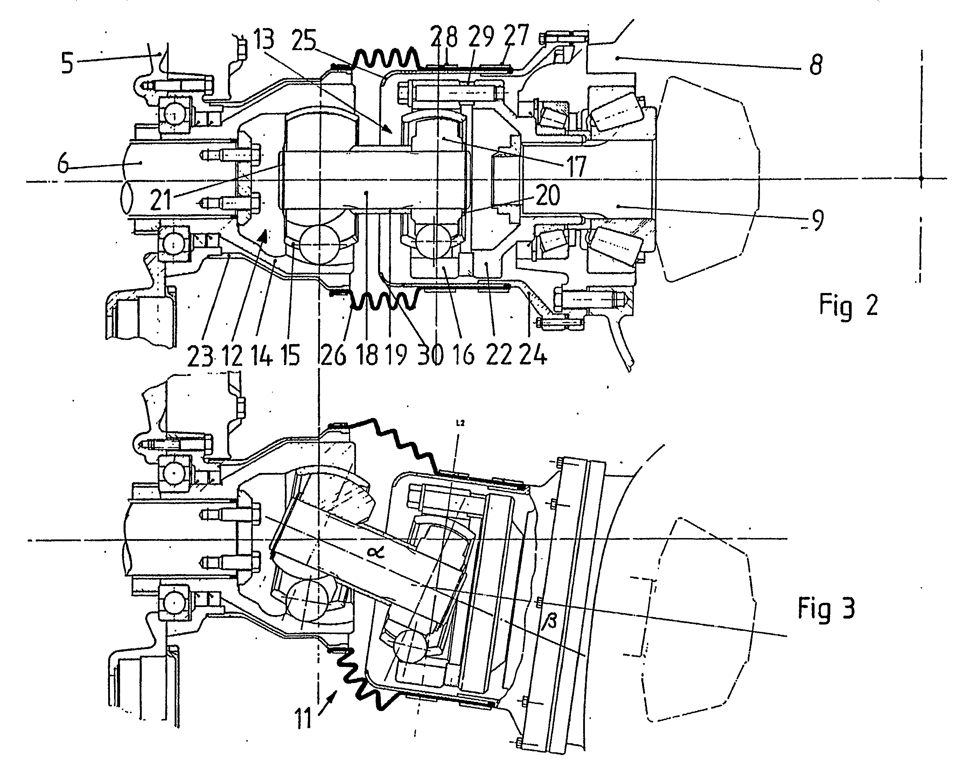

Figur 1 zeigt einen Fahrzeuglängsträger 1 mit einem daran befestigten Haltebock 2, in dessen Anlenkpunkt A die Achsschwinge 3 aufgehängt ist, die über Luftfeder 10 gegenüber dem Rahmenlängsträger 1 abgestützt ist. Zwischen Getriebe 4 und Luftfeder 10 ist auf der Achsschwinge 3 die Hinterachse 7 angeordnet, wobei die Antriebsmittelachse ED von der Getriebemittelebene E bis zur Hinterachsmittelebene D führt. Der Anlenkpunkt A der Achsschwinge 3 liegt auf oder in der Nähe der Antriebsmittelebene ED. Der Getriebeausgang und der Hinterachseingang sind mittels einer in der Fig. 1 nicht sichtbaren homokinetischen Gelenkwelle 11 (Fig. 2 und 3) verbunden, wobei B der getriebeseitige und C der hinterachsseitige Gelenkmittelpunkt ist. Am Punkt B kann sich die Gelenkwelle um die Winkel α1 bzw. α2 beugen, an den Punkten C1, C2 um die Winkel 1 bzw. β2. Dabei ergeben sich die Auslenkpunkte C1 und C2 und als Differenz der Kreisbögen AC - BC der Verschiebeweg s am Loslager 13 (Fig. 2 und 3). Mit F1 und F2 sind die Ausfederwege der Hinterachse angezeigt.

In den Figuren 2 und 3 ist die homokinetische Gelenkwelle 11 in Zuordnung zum Getriebe 4 und Hinterachse 7 dargestellt, dabei zeigt Fig. 2 den Ruhezustand, Fig. 3 den ein- oder ausgefederten Zustand an. Die homokinetische Gelenkwelle 11 besteht aus einem homokinetischen Festlager 12 und einem homokinetischen Loslager 13, die über eine Welle 18 miteinander verbunden sind, wobei ihr axialer Abstand über eine Distanzbuchse 19 hergestellt ist und ihre axiale Fixierung über Sicherungsringe 20, 21 erfolgt. Das Festlager 12 weist einen größeren Beugungswinkel auf als das Loslager 13, das aber eine geringe axiale Verschiebung (s) zuläßt. Festlager 12 besteht aus einem Außenteil 14 das mit der Getriebeausgangswelle 6 fest verbunden ist, und einem Innenteil 15, das z.B. über Verzahnung auf der Welle 18 fixiert ist. Loslager 13 besteht aus einem Außenteil 16, das über Flansch 22 und Distanzscheibe 29 fest mit der Hinterachswelle 9 verbunden ist, und einem Innenteil 17, das z.B. über Verzahnung auf der Welle 18 befestigt ist. Am Getriebegehäuse 5 ist das rotationsfreie Abdeckrohr 23 fixiert, am Hinterachsgehäuse 8 das rotationsfreie Abdeckrohr 24. Am freien Ende des Abdeckrohres 24 ist eine geteilte Abdeckkappe 25 mit gekrümmtem Auslauf 30 angeordnet, die das Loslager 13 übergreift. Das eine Ende des Faltenbalges 26, der die homokinetischen Gelenke 12, 13 gegen Verschmutzung schützt, ist mittels Spannschellen 27, 28 auf Abdeckrohr 24 und Abdeckkappe 25 festgezurrt. Durch den gekrümmten Auslauf 30 der Abdeckkappe 25 ist der Faltenbalg 26 bei Ein -oder Ausfederung der Hinterachse vor den rotierenden Gelenkteilen geschützt.

Bei Montagearbeiten an der Gelenkwelle 11 werden die Spannschellen 27, 28 gelöst und der Faltenbalg 26 wird zum Getriebe 4 hin verschoben. Danach kann die geteilte Abdeckkappe 25 abgehoben werden, so daß die homokinetischen Gelenke 12 und 13 zur Wartung und zur Demontage freiliegen und zugänglich sind.

Bezugszeichenliste

1 Rahmenlängsträger
2 Haltebock an 1
3 Achsschwinge
4 Getriebe
5 Getriebegehäuse
6 Getriebeausgangswelle
7 Hinterachse
8 Hinterachsgehäuse
9 Hinterachseingangswelle
10 Feder (Luftfeder)
11 Homokinetische Gelenkwelle
12 Homokinetisches Festlager
13 Homokinetisches Loslager
14 Außenteil von 12
15 Innenteil von 12
16 Außenteil von 13
17 Innenteil von 13
18 Welle
19 Distanzbuchse
20 Sicherungsring
21 Sicherungsring
22 Flansch
23 Abdeckrohr
24 Abdeckrohr
25 Abdeckkappe
26 Faltenbalg
27 Bandschelle
28 Bandschelle
29 Distanzscheiben
30 Auslauf an 25
A Anlenkpunkt der Achsschwinge
B Gelenkmittelpunkt des Festlagers 12

C, C1, C2, Gelenkmittelpunkt des Loslagers 13
D, D1, D2, Hinterachsmittelebene
E Getriebemittelebene
F1, F2 Ein- und Ausfederwege der Hinterachse
ED Antriebsmittelachse
s Schiebeweg
α Beugewinkel an Festlager
β Beugewinkel an Loslager

**Patentansprüche**

1. Antriebsverbindung zwischen dem Getriebe (4) und der angetriebenen Hinterachse (7) eines Nutzfahrzeuges, insbesondere eines Sattelschleppers mit Unterflurbauweise der Motor-Getriebe-Einheit, wobei die Getriebeausgangswelle mit der Hinterachseingangswelle über eine gegen äußere Einflüsse abgeschirmte, homokinetische Gelenkwelle (11) verbunden ist, dadurch gekennzeichnet, daß die über einen Haltebock (2) am Fahrzeuglängsrahmen (1) befestigte Achsschwinge (3), die Hinterachse (7) tragend und mittels einer Feder (10) gegenüber dem Fahrzeuglängsrahmen (1) abgestützt, in einem auf oder einem nahe der Antriebsachse (ED) liegenden Punkt (A) angelenkt ist und als Verbindungselement zwischen der Getriebeausgangswelle (6) und der Hinterachseingangswelle (9) eine homokinetische Gelenkwelle (11) mit einem an sich bekannten homokinetischen Festlager (12) und einem an sich bekannten homokinetischen Loslager (13) derart angeordnet ist, daß das Festlager (12), schwenkbar in (B) gelagert, an der Getriebeausgangswelle (6) und das axial verschiebbare Loslager (13), schwenkbar in (C) gelagert, an der Hinterachseingangswelle (9) angeordnet ist, wobei der sich ergebende Beugungswinkel (α) des getriebeseitigen Festlagers (12) größer ist als der sich ergebende Beugungswinkel (β) des hinterachsseitigen Loslagers (13).

2. Antriebsverbindung nach Anspruch 1, dadurch gekennzeichnet, daß der Anlenkpunkt (A) der Achsschwinge (3) gegenüber der Antriebsmittelachse (ED) derart verschoben ist, daß die sich bei Auslenkung der Achsschwinge (3) ergebenden Beugungswinkel (β1, β2) gleich sind.

3. Antriebsverbindung nach Anspruch 1 oder 2, dadurch gekennzeichnet, daß die Abstände zwischen Schwingenanlenkpunkt (A) und Gelenkmittelpunkt (B) sowie zwischen Gelenkmittelpunkt (B) und Gelenkmittelpunkt (C) unter Berücksichtigung der Erfordernisse von Achseinfederungskinematik, Federweg der Feder und den gegebenen Platzverhältnissen minimiert sind.

4. Antriebsverbindung nach den Ansprüchen 1 - 3, dadurch gekennzeichnet, daß die Feder (10) als Luftfeder ausgebildet ist.

5. Antriebsverbindung nach einem oder mehreren der Ansprüche 1 - 4, insbesondere dadurch gekennzeichnet, daß das homokinetische Festlager (12) aus einem auf der Getriebeausgangswelle (6) befestigten Außenteil (14) und einem Innenteil (15) besteht, das über eine Welle (18) unter Zwischenschaltung einer Distanzbuchse (19) mit dem Innenteil (17) des homokinetischen Loslagers (13) verbunden ist, dessen Außenteil (16) über einen Flansch (22) fest mit der Hinterachseingangswelle (9) verbunden ist.

6. Antriebsverbindung nach einem oder mehreren der Ansprüche 1 - 5, dadurch gekennzeichnet, daß am Getriebegehäuse (5) und am Hinterachsgehäuse (8) Abdeckrohre (23, 24) befestigt sind und zusätzlich Abdeckrohr (24), dieses (24) in seiner Längserstreckung verlängernd, von einer geteilten Abdeckkappe (25) übergriffen ist, wobei Abdeckrohre (23) und Abdeckkappe (25) mittels eines Faltenbalges (26) verbunden sind.

7. Antriebsverbindung nach Anspruch 6, dadurch gekennzeichnet, daß Faltenbalg (26) über Spannschelle (27) mit Abdeckrohr (24) und Abdeckkappe (25) sowie über Spannschelle (28) nur mit Abdeckkappe (25) verbunden ist.

8. Antriebsverbindung nach den Ansprüchen 6 und 7, dadurch gekennzeichnet, daß das Abdeckrohr (24) in seiner Längserstreckung vor Loslager (13) endet und die sich daran anschließende Abdeckkappe (25) an ihrem Auslauf (30) gekrümmt ist.

**Revendications**

1. Assemblage de transmission entre la boîte de vitesses (4) et l'essieu AR moteur (7) d'un véhicule industriel, en particulier d'un tracteur routier dans la version avec ensemble moteur/boîte de vitesses disposé sous le plancher, l'arbre de sortie de la boîte de vitesses étant relié à l'arbre d'entrée de l'essieu AR par un arbre à joint homocinétique (11) protégé des influences extérieures. Cet arbre de transmission à joint homocinétique se signale par le fait que le balancier d'essieu (3) fixé au cadre du véhicule (1) par l'intermédiaire d'un support (2), portant l'essieu AR (7) et prenant appui sur le cadre du véhicule (1) par l'intermédiaire d'un ressort (10), est articulé en un point (A) situé soit sur, soit à proximité de l'essieu moteur (ED) et qu'en tant qu'élément de liaison entre l'arbre de sortie de boîte de vitesses (6) et l'arbre d'entrée de l'essieu AR (9), un arbre de transmission à joint homocinétique (11) avec un palier homocinétique fixe (12) en soi connu et avec un palier homocinétique mobile (13) en soi connu, est disposé de telle façon que le palier fixe (12) qui pivote en (B), est disposé sur l'arbre de sortie de boîte de vitesses (6) et le palier mobile coulissant dans le sens longitudinal (13), qui pivote en (C), est disposé sur l'arbre d'entrée de l'essieu AR (9), l'angle de flexion (α) en résultant formé par le palier fixe côté boîte de vitesses (12) est plus grand que l'angle de flexion (b) en résultant formé par le palier mobile côté essieu AR (13).

2. Assemblage de transmission selon la revendication 1, caractérisé par le fait que le point d'articulation (A) du balancier d'essieu (3) est décalé de telle façon par rapport au milieu de l'essieu moteur (ED) que les angles de flexion (β1, β2) résultant du débattement de l'articulation du balancier d'essieu (3) sont égaux.

3. Assemblage de transmission selon la revendication 1 ou la revendication 2, caractérisé par le fait que les distances entre le point d'articulation de balancier (A) et le milieu de l'articulation (B) ainsi qu'entre le milieu de l'articulation (B) et le milieu de l'articulation (C) sont minimisées compte tenu des exigences de la cinématique d'écrasement de l'essieu, de la course des ressorts et des conditions d'encombrement.

4. Assemblage de transmission selon les revendications 1 à 3, caractérisé par le fait que le ressort (10) est un ressort pneumatique.

5. Assemblage de transmission selon l'une ou plusieurs des revendications de 1 à 4, caractérisé en particulier par le fait que le palier homocinétique fixe (12) se compose d'une partie extérieure (14) fixée sur l'arbre secondaire de la boîte de vitesses (6) et d'une partie intérieure (15) en liaison avec la partie intérieure (17) du palier homocinétique mobile (13) par l'intermédiaire d'un arbre (18) en faisant appel à une bague entretoise (19), la partie extérieure du palier mobile (13) formant un assemblage avec l'arbre d'entrée de l'essieu AR (9) par l'intermédiaire d'un flasque (22).

6. Assemblage de transmission selon l'une ou plusieurs des revendications de 1 à 5, caractérisé par le fait que des tubes de couverture (23, 24) sont disposés sur le carter de boîte de vitesses (5) et sur le carter de l'essieu AR (8), et qu'en plus, le tube de couverture (24) rallongeant la longueur de celui-ci (24), est recouvert d'une coiffe de couverture divisée (25), les tubes de couverture (23) et la coiffe de couverture (25) étant reliés par un soufflet (26).

7. Assemblage de transmission selon la revendication 6, caractérisé par le fait que le soufflet (26) est relié au tube de couverture (24) par l'intermédiaire d'un collier de serrage (27) et avec la coiffe de couverture (25) ainsi que seulement avec la coiffe de couverture (25) par l'intermédiaire d'un collier de serrage (28).

8. Assemblage de transmission selon les revendications 6 et 7, caractérisé par le fait que le tube de couverture (24) s'arrête dans sa longueur avant le palier mobile (13) et que la coiffe de couverture (25) y faisant suite présente une incurvation à son extrémité (30).

**Claims**

1. A drive connexion between the gearbox and the driven rear axle (7) of a lorry, in particular an articulated truck with an underfloor design of the engine-gearbox unit, the gearbox output shaft being connected to the rear axle input shaft by way of 8 homokinetic universal-joint shaft (11) protected from external effects, characterized in that the axle arm (3) secured to the longitudinal frame (1) of the vehicle by way of a holding block (2), carrying the rear axle (7) and supported relative to the longitudinal frame (1) of the vehicle by means of a spring (10), is articulated at a point (A) lying on or close to the driving axis (ED) and a homokinetic universal-joint shaft (11) having a homokinetic fixed bearing (12) known per se and a homokinetic movable bearing (13) known per se is arranged as the connecting element between the gearbox output shaft (6) and the rear axle input shaft (9) in such a way that the fixed bearing (12), mounted pivotably at (B), is arranged on the gearbox output shaft (6) and the axially displaceable movable bearing (13), mounted pivotably at (C), is arranged on the rear axle input shaft (9), the resulting angle of deflexion (α) of the fixed bearing (12) on the gearbox being greater than the resulting angle of deflexion (β) of the movable bearing (13) on the rear axle.

2. A drive connexion according to Claim 1, characterized in that the articulation point (A) of the axle arm (3) is displaced relative to the central driving axis (ED) in such a way that the angles of deflexion ($\beta 1$, $\beta 2$) resulting during deflexion of the axle arms (3) are equal.

3. A drive connexion according to Claim 1 or 2, characterized in that the distances between the articulation point (A) of the arm and the median point (B) of the joint and between the median point (B) of the joint and the median point (C) of the joint are minimized while taking into consideration the demands of the shaft spring-deflexion kinematics, the path of the spring and the resulting conditions of space.

4. A drive connexion according to Claims 1 to 3, characterized in that the spring (10) is constructed as a pneumatic spring,

5. A drive connexion according to one or more of Claims 1 to 4, in particular characterized in that the homokinetic fixed bearing (12) comprises an outer part (14) secured to the gearbox output shaft (6) and an inner part (15) connected to the inner part (17) of the homokinetic movable bearing (13) by way of a shaft (18) with the interposition of a spacer sleeve (19), the outer part (16) of the movable bearing (13) being rigidly connected to the rear axle input shaft (9) by way of e flange (22).

6. A drive connexion according to one or more of Claims 1 to 5, characterized in that covering tubes (23, 24) are secured to the gearbox casing (5) and to the rear axle housing (8) and, in addition, a divided covering cap (25) engages over a covering tube (24), lengthening the latter (24) in its longitudinal extent, the covering tube (23) and the covering cap (25) being connected by means of a corrugated bellows (26).

7. A drive connexion according to Claim 6, characterized in that the corrugated bellows (26) is connected by way of a clamp (27) to the covering tube (24) and the covering cap (25) and by way of a clamp (28) to the covering cap (25) only.

8. A drive connexion according to Claims 6 and 7, characterized in that the covering tube (24) terminates in its longitudinal extent in front of the movable bearing (13) and the adjoining covering cap (25) is curved at its end (30).

EP 0 340 431 B1

Fig. 1

5  13  25  28 29 27  8

6

21  17

20

9

23 12 14 15  26 18 19 30 16 22 24

Fig 2

L2

α

β

11

Fig 3

EP 0 340 431 B1